# EUROPEAN PATENT SPECIFICATION

(11) **EP 0 768 238 B1**
(45) Date of publication and mention of the grant of the patent: **19.12.2001**
(21) Application number: 95202748.0
(22) Date of filing: 11.10.1995
(51) Int. Cl.: B64C 3/30, B64B 1/20

(54) **Aircraft and method of flying the same**
Flugzeug und Verfahren zum Gebrauch
Avion et procédé d'utilisation

(43) Date of publication of application: 16.04.1997
(73) Proprietor: Hirose, Tokuzo, Ashiya-shi Hyogo-ken (JP)
(72) Inventor: Hirose, Tokuzo, Ashiya-shi Hyogo-ken (JP)
(74) Representative: Smulders, Theodorus A.H.J., Ir.

(56) References cited:
- WO-A-91/01917
- US-A- 1 860 087
- US-A- 2 382 817
- US-A- 3 913 871
- US-A- 5 005 783
- US-A- 5 425 515

## Description

### BACKGROUND OF THE INVENTION

### 1. Field of the invention

The present invention relates to a floating and flying aircraft in the air.

### 2. Description of the related art

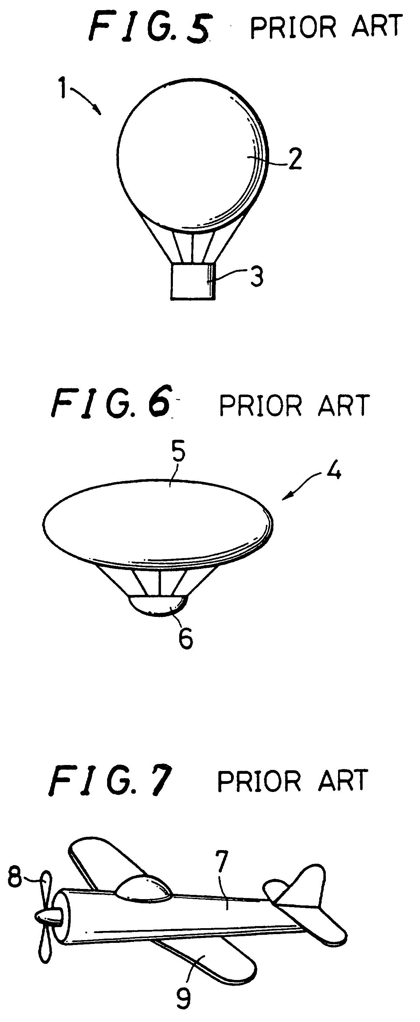

A typical prior art is a balloon 1 as shown in Fig.5. The balloon 1 comprises a spherical envelope 2 filled with a gas lighter than air and a carriage basket 3 suspended from the envelope for carrying a crew.

A further prior art shown in Fig. 6 discloses a balloon 4 which comprises a spheroidal envelope filled with a gas lighter than air, and a carriage basket hung from the envelope for carrying a crew.

In these prior arts shown in Figs. 5 and 6, since the envelopes 2, 5 are spherical or spheroidal, flying speed of these balloons are not able to be enhanced. Further, in these prior arts, there has not been considered to make use of wind to increase buoyancy or aerodynamic lift for the balloons.

Fig. 7 is a perspective view of a further prior art. The prior art relates to an airplane, which obtains thrust by driving a propeller 8 rotationally, and aerodynamic lift by means of a wing 9.

In this kind of airplane as shown in Fig. 7, if any trouble should occur with the propeller 8, the aerodynamic lift might not be generated by means of the wing 9, which causes a severe accident such as an airplane crash.

In US-A-5,425,515, particularly in the figures 9-11, an aircraft is described with a body having an axis extending in a flight direction, two vertical wings at both sides of said body and two horizontal wings mounted fore and behind, and beneath the body and the vertical wings. At the upper side the body and the vertical wings are connected to each other by means of strips.

### SUMMARY OF THE INVENTION

It is an object of the invention to provide an aircraft which is capable of enhancing a speed and capable of preventing a crash even when a propeller provides no thrust for the aircraft.

The aircraft according to the invention therefore comprises
a body having an axis extending in a flight direction;
a nearly triangular fist main wing attached onto the body to be parallel with the axis of the body, the first main wing being provided with a solar battery for supplying electric power to lighting or the like inside the aircraft;
at least one nearly triangular flat upper second and third main wings provided above the first main wing at small intervals;
a plurality of vertical wings provided vertically to the first main wing and the respective upper second and third main wings and in parallel with the axis of the body, the plurality of vertical wings connecting the first main wing and the upper second an third main wings;
an upper vertical wing provided on the top face of the upper third main wing arranged uppermost of the plurality of upper second and third main wings, the upper vertical wing extending from the front toward the rear of the upper third main wing in parallel with the axis and having a vertical tail plane in the rear thereof;
a jet engine provided on the upper third main wing arranged uppermost, the jet engine including an air intake facing a flight direction and an air exhaust protruding from the rear of the upper third main wing; and
a guide member for guiding air into the air intake, the guide member extending from the front of the upper vertical wing to the air intake of the jet engine and forming an angle with the first main wing of 10 to 45°, wherein the first main wing, the upper second and third main wings, the vertical wings and the upper vertical wing are respectively made of a flexible material, and include spaces inside, which are filled with a gas lighter than air.

The aircraft of the present invention is distinguishable from that in the US-patent by its specific construction and the jet engine with guide member.

### BRIEF DESCRIPTION OF THE DRAWINGS

Other and further objects, features, and advantage of the invention will be more explicit from the following detailed description taken with reference to the drawings wherein:
Fig. 1 is a perspective view of an aircraft 110 of a yet further embodiment of the invention;
Fig. 2 is a front view of the aircraft 110;
Fig. 3 is a plan view of the aircraft 110;
Fig. 4 is a side view of the aircraft 110;
Fig. 5 is a perspective view of a balloon 1 of a typical prior art;
Fig. 6 is a perspective view of a balloon 4 of a further prior art; and
Fig. 7 is a perspective view of an aircraft of a further prior art.

### DETAILED DESCRIPTION OF THE PREFERRED EMBODIMENTS

Now referring to the drawings, a preferred embodiment of the invention is described below.

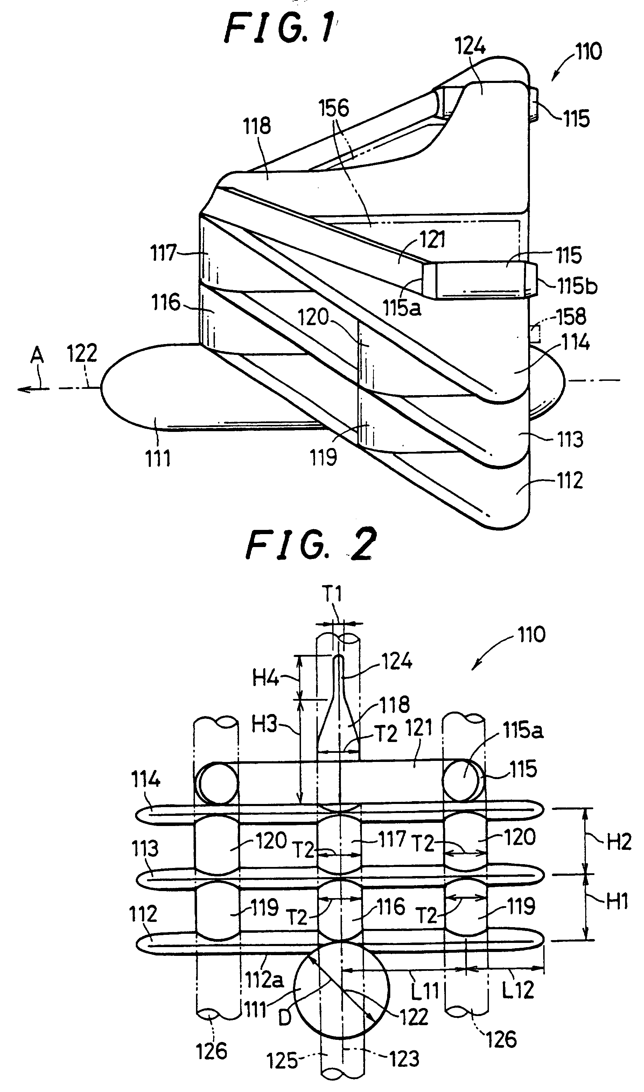

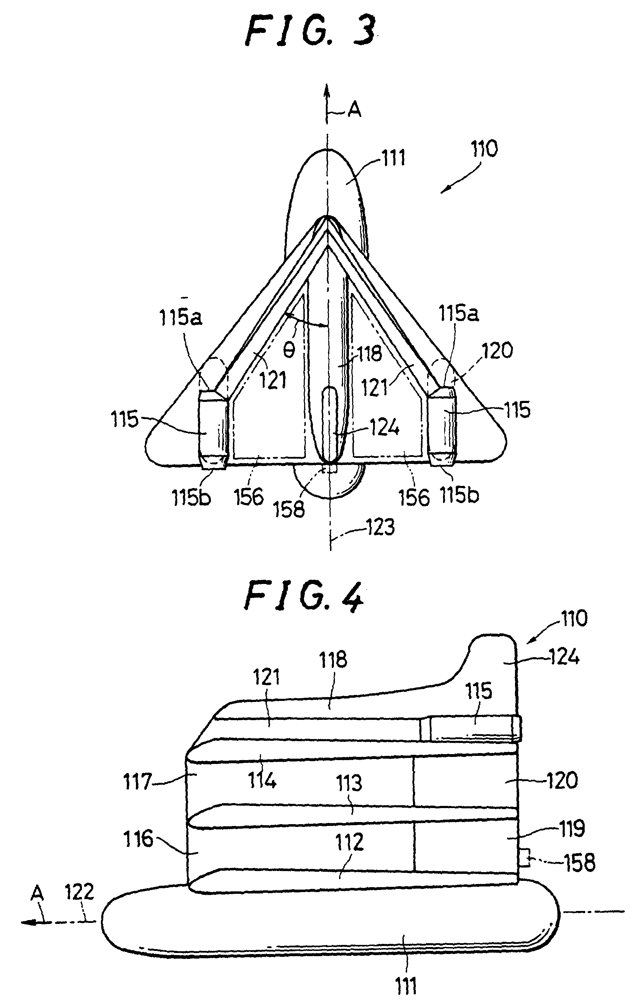

Fig. 1 is a perspective view of an aircraft 110 of a yet further embodiment of the invention; Fig. 2 is a front view of the aircraft 110; Fig. 3 is a plan view of the aircraft 110; and fig. 4 is a side view of the aircraft 110. A body 111 of the aircraft 110 is made to have a nearly cylindrical streamline shape having a diameter D. The axis 122 of the nearly cylindrical body 111 is directed to a flight direction A. The aircraft 110 is constituted to be symmetrical with respect to an imaginary vertical plane 123 including the axis 122. A first main wing 112 which is flat and nearly triangular and has two round end portions is attached to the body 111 so as to be parallel with the axis 122 of the body 111. The right and left ends of the first main wing 112 are formed to be round and the bottom side 112a of the first main wing 112 is arranged above the axis 122 of the body 111. A second main wing 113 shaped similarly with the first main wing 112 is provided above the first main wing 112 at a distance H1 therefrom in parallel with the first main wing 112, and a third main wing 114 shaped similarly with the first main wing 112 is provided above the second main wing 113 at a distance H2 therefrom in parallel with the first and second main wings 112, 113. The distances H1 and H2 are selected to be equal to each other.

The first and second main wing 112, 113 are connected via a vertical wing 116 arranged above the body 111 and a pair of vertical wings 119 arranged on the right and left sides of the vertical wing 116. The second and third main wings 113, 114 are connected via a vertical wing 117 arranged above the vertical wing 116 and a pair of vertical wings 120 arranged on the right and left sides of the vertical wing 117.

The vertical wings 116, 117, 119, 120 are respectively formed like a nearly elliptic cylinder. The vertical wings 116 and 117 are arranged so as to form a first imaginary nearly elliptic cylinder 125 vertical to the first, second and third main wings 112 to 114. The vertical wings 119 and 120 are arranged so as to form a second imaginary nearly elliptic cylinder 126 vertical to the first, second and third main wings 112 to 114. The major axis of the ellipse which is a section of the vertical wings 116 and 117, taken vertically to the longitudinal axis of the vertical wings 116 and 117, is arranged to be parallel with the longitudinal axis 122 of the body 111. The major axis of the ellipse which is a section of the vertical wings 119 and 120, taken vertically to the longitudinal axis of the vertical wings 119 and 120, is arranged to be parallel with the longitudinal axis 122 of the body 111. Such a constitution improves beeline flight. Additionally the distance L11 between the imaginary plane 123 and the center of the vertical wing 119 is longer than the distance L12 between the center of the vertical wing 119 and one outer end of the main wing 112, preferably the distance L11 is 1.5 times longer than the distance L12. Accordingly the structural strength of the aircraft 110 is enhanced.

An upper vertical wing 118 is provided above the third main wing 114. The upper vertical wing 118 is arranged to extend from the front end which is on a flight direction side A to the rear end of the side A of the third main wing 114 and be parallel with the axis 122 of the body 111. A vertical tail plane 124 is provided in the rear portion of the upper vertical wing 118, the vertical tail plane 124 extending upwardly. The vertical tail plane 124 is formed so that the thickness T1 is thinner than the thickness T2 of the vertical wing 118, and the vertical wing 118 and the vertical tail plane 124 are formed to be integrated as one body. A distance H 1 from the first main wing 112 to the second main wing 113 is shorter than a distance H3 from the lower end of the vertical wing 118 to the lower end of the vertical tail plane 124, and longer than a distance H4 from the upper end to the lower end of the vertical tail plane 124. Preferably the distance H3 is about two times longer than the distance 4, and the distance H1 is about 1.5 times longer than the distance H4. Accordingly the flight stability is improved. Additionally the thicknesses of the respective vertical wings 116, 117, 119 and 120 are equal to the thickness T2 of the lower end of the vertical wing 118. A pair of jet engines 115 are provided right and left above the third main wing 114. A guide member 121 is provided to extend from the front of the upper vertical wing 118 to an air intake 115a of each jet engine 115. Since the section of the guide member is formed to have a convex curve in its rear portion, the air in front of the guide member 121 can be effectively guided into the air intakes 115a of the jet engines 115 to be compressed during flight of the aircraft 110, resulting in improving the effect of the jet engines 115. The angle θ formed by the guide member 121 and the imaginary plane 123 is selected to be in the range of from 10 degrees to 45 degrees, preferably to be 35 degrees, and the air can be effectively guided into the air intake 115a. Since air outlets 115b are provided to protrude backward from the third main wing 114, high temperature exhaust air exhausted from the air exhausts 115b can be prevented from blowing against a part of the airframe such as vertical wings.

The first to third main wings 112 to 114, vertical wings 116, 117, 119 and 120, and upper vertical wing 118, which are made of a light flexible material, are hollow and communicate with one another in their insides. Since the insides of the first to third main wings 112 to 114, vertical wings 116, 117, 119 and upper vertical wing 118 are filled with a gas lighter than air, for example, even in the event where an engine trouble occurs in the jet engines 115 and a thrust can not be obtained any more, the aircraft is prevented from crashing. The first to third main wings 112 to 114 are formed like triangles, so that the spaces in the main wings can be enlarged to be filled with the largest amount possible of gas. As the gas may be used rare gases such as helium gas and neon gas, and natural gases. Additionally the number of the main wings is not limited to three, a plurality of the second main wings may be provided in order to increase the amount of the filler gas and the body 111 may be filled with the gas.
Additionally in the lieu of the jet engines 115, a propeller and an internal combustion engine for driving the propeller may be provided.

## Claims

1. An aircraft (110) comprising:
a body (111) having an axis (122) extending in a flight direction;
a nearly triangular first main wing (112) attached onto the body (111) to be parallel with the axis (122) of the body (111), the first main wing (112) being provided with a solar battery for supplying electric power to lighting or the like inside the aircraft (110);
at least one nearly triangular flat upper second and third main wings (113, 114) provided above the first main wing (112) at small intervals (H1, H2);
a plurality of vertical wings (116, 117, 119, 120) provided vertically to the first main wing (112) and the respective upper second and third main wings (113, 114) and in parallel with the axis (122) of the body, the plurality of vertical wings (116, 117, 119, 120) connecting the first main wing (112) and the upper second an third main wings (113, 114) ;
an upper vertical wing (118) provided on the top face of the upper third main wing (114) arranged uppermost of the plurality of upper second and third main wings (113, 114), the upper vertical wing (118) extending from the front toward the rear of the upper third main wing (114) in parallel with the axis and having a vertical tail plane (124) in the rear thereof;
a jet engine (115) provided on the upper third main wing (114) arranged uppermost, the jet engine (115) including an air intake (115a) facing the flight direction and an air exhaust (115b) protruding from the rear of the upper third main wing (114); and
a guide member (121) for guiding air into the air intake (115a), the guide member (121) extending from the front of the upper vertical wing (118) to the air intake (115a) of the jet engine (115) and forming an angle with the first main wing (112) of 10 to 45°, wherein the first main wing (112), the upper second and third main wings (113, 114), the vertical wings (116, 117, 119, 120) and the upper vertical wing (118) are respectively made of a flexible material, and include spaces inside, which are filled with a gas lighter than air.

## Patentansprüche

1. Luftfahrzeug (110), mit:
- einem Rumpf (111), dessen Achse (122) sich in Flugrichtung erstreckt,
- einem etwa dreieckigen ersten Hauptflügel (112), der am Rumpf (111) parallel zur Achse (122) des Rumpfes (111) befestigt ist und der eine Solarbatterie zur Lieferung von elektrischem Strom für die Beleuchtung od. dgl. im Inneren des Luftfahrzeugs (110) aufweist,
- mindestens einem etwa dreieckigen flachen oberen zweiten und dritten Hauptflügel (113, 114), die mit geringen Abständen (H1, H2) über dem ersten Hauptflügel (112) vorgesehen sind,
- mehreren senkrechten Flügeln (116, 117, 119, 120), die senkrecht zum ersten Hauptflügel (112) und dem jeweiligen oberen zweiten und dritten Hauptflügel (113, 114) und parallel zur Achse (122) des Rumpfes vorgesehen sind, wobei die mehreren senkrechten Flügel (116, 117, 119, 120) den ersten Hauptflügel (112) und den oberen zweiten und dritten Hauptflügel (113, 114) verbinden,
- einem oberen senkrechten Flügel (118) auf der Oberseite des oberen dritten Hauptflügels (114), der an oberster Stelle der mehreren oberen zweiten und dritten Hauptflügel (113, 114) angeordnet ist, wobei sich der obere senkrechte Flügel (118) bezüglich des oberen dritten Hauptflügels (114) von vorne nach hinten parallel zur Achse erstreckt und an seiner Rückseite ein vertikales Leitwerk (124) aufweist,
- ein auf dem oberen dritten Hauptflügel (114) an oberster Stelle vorgesehenes Düsentriebwerk (115), das einen der Flugrichtung zugewandten Lufteinlaß (115a) und einen aus der Rückseite des oberen dritten Hauptflügels (114) herausragenden Luftauslaß (115b) enthält, und
- einem Führungselement (121) zum Leiten von Luft in den Lufteinlaß (115a), das sich von der Vorderseite des oberen senkrechten Flügels (118) zum Lufteinlaß (115a) des Düsentriebwerks (115) erstreckt und mit dem ersten Hauptflügel (112), einen Winkel von 10 bis 45° bildet, wobei der erste Hauptflügel (112), der obere zweite und dritte Hauptflügel (113, 114), die senkrechten Flügel (116, 117, 119, 120) und der obere senkrechte Flügel (118) jeweils aus einem flexiblen Material hergestellt sind und im Inneren Räume aufweisen, die mit einem Gas gefüllt sind, das leichter als Luft ist.

## Revendications

1. Aéronef (110) comprenant :
un fuselage (111) ayant un axe (122) s'étendant dans une direction de vol ;
une première aile principale à peu près triangulaire (112) fixée sur le fuselage (111) de manière à être parallèle à l'axe (122) du fuselage (111), la première aile principale (122) étant pourvue d'une batterie solaire destinée à fournir la puissance électrique pour l'éclairage ou similaire à l'intérieur de l'aéronef (110) ;
au moins une deuxième et une troisième ailes principales supérieures plates à peu près triangulaires (113, 114) prévues au-dessus de la première aile principale (112) à de petits intervalles (H1, H2) ;
une pluralité d'ailes verticales (116, 117, 119, 120) prévues verticalement par rapport à la première aile principale et aux deuxième et troisième ailes principales supérieures respectives (113, 114) et parallèles à l'axe (122) du fuselage, la pluralité d'ailes verticales (116, 117, 119, 120) reliant la première aile principale (112) et les deuxième et troisième ailes principales supérieures (113, 114) ;
une aile verticale supérieure (118) prévue sur la surface supérieure de la troisième aile principale supérieure (114) agencée au-dessus de la pluralité de deuxièmes et troisièmes ailes principales supérieures (113, 114), l'aile verticale supérieure (118) s'étendant de l'avant vers l'arrière de la troisième aile principale supérieure (114) parallèlement à l'axe et ayant un empennage vertical (124) à l'arrière de celle-ci ;
un réacteur (115) prévu sur la troisième aile principale supérieure (114) agencé dans la partie supérieure, le réacteur (115) comprenant une entrée d'air (115a) orientée dans la direction de vol et une sortie d'air (115b) faisant saillie de l'arrière de la troisième aile principale supérieure (114) ; et
un élément de guidage (121) destiné à guider l'air dans l'entrée d'air (115a), l'élément de guidage (121) s'étendant depuis l'avant de l'aile verticale supérieure (118) jusqu'à l'entrée d'air (115a) du réacteur (115) et formant un angle avec la première aile principale (112) compris entre 10 et 45°, dans lequel la première aile principale (112), les deuxième et troisième ailes principales supérieures (113, 114), les ailes verticales (116, 117, 119, 120) et l'aile verticale supérieure (118) sont respectivement réalisées en un matériau flexible et comprennent des espaces à l'intérieur qui sont remplis d'un gaz plus léger que l'air.
